# EUROPEAN PATENT APPLICATION

(11) **EP 4 089 522 A1**
(43) Date of publication of application: **16.11.2022**
(21) Application number: 22172450.3
(22) Date of filing: 10.05.2022
(51) Int. Cl.: G06F 3/14, G06F 9/54, H04L 51/224

(54) **MANAGING NOTIFICATIONS ON ELECTRONIC DEVICES**

(30) Priority: 12.05.2021 US 202163187894 P; 23.03.2022 US 202217701665
(71) Applicant: Apple Inc., Cupertino, CA 95014 (US)
(72) Inventor: BLATZ, John L., San Francisco (US); RAMASWAMY, Pallavika, Cupertino (US); AGGARWAL, Akshay, Cupertino (US); BANSAL, Anshuman, St. Louis (US)
(74) Representative: Zacco Denmark A/S

(57) **Abstract**

The subject technology provides notification management systems and methods that can be used to efficiently and manage notifications on electronic devices. The subject technology provides systems and methods for obtaining entity data pertaining to entities associated with the electronic device, and generating, for an operational mode associated with the electronic device, an entity score for each of the entities based on the obtained entity data. Based on the entity scores, a recommendation of a set of configuration settings for the operational mode associated with the computing device is provided for display by the computing device. A user input indicating acceptance of the set of configuration settings is received. Thereafter, when the computing device is in the operational mode, display of one or more notifications is controlled based at least in part on the set of configuration settings.

## Description

### CROSS REFERENCE TO RELATED APPLICATIONS

This application claims the benefit of priority to U.S. Provisional Patent Application No. 63/187,894, entitled "Managing Notifications On Electronic Devices," filed on May 12, 2021, the disclosure of which is hereby incorporated herein in its entirety.

### TECHNICAL FIELD

The present description generally relates to machine learning, including, for example, using machine learning for management of notifications on electronic devices.

### BACKGROUND

Software engineers and scientists have been using machine learning to make improvements across different industry applications.

### BRIEF DESCRIPTION OF DRAWINGS

Certain features of the subject technology are set forth in the appended claims. However, for purpose of explanation, several embodiments of the subject technology are set forth in the following figures.
FIG. 1 illustrates an example network environment in accordance with one or more implementations of the subject technology.
FIG. 2 illustrates an example system in accordance with one or more implementations of the subject technology.
FIG. 3 illustrates an example framework for generating entity scores for entities, in accordance with one or more implementations of the subject technology.
FIG. 4 illustrates an example representation of operations that may be performed for calculating entity scores, in accordance with one or more implementations of the subject technology.
FIG. 5 illustrates an example block diagram for generating entity scores, in accordance with one or more implementations of the subject technology.
FIG. 6 illustrates a flowchart of a method for managing notifications on electronic devices, in accordance with one or more implementations of the subject technology.
FIG. 7 depicts a computing-device based implementation of the system of FIG. 2 in accordance with one or more implementations of the subject technology.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring the concepts of the subject technology.

Users may perform one or more tasks using different entities associated with computing devices, such as applications, widgets, and contacts. For instance, a user may book movie tickets using an application provided on their smartphone. In another example, the user may send or receive emails using an email application on the smartphone. In yet another example, the user may obtain information about the weather at the user's location using a weather-widget installed on the smartphone. The term 'widget' may be understood as an application, or a component of an interface, that enables a user to perform a function or access a service. In yet another example, the user may chat with other users using a chat application or a social media application provided on the smartphone. In yet another example, a calendar application of the smartphone may be used by the user for setting reminders, etc. Besides the above, computing devices may also provide support for calling services, via which the user may call or receive calls from other users.

In some operational scenarios, an action or event related to one of the entities associated with and/or on the computing device may cause a notification related thereto to be generated and displayed to the user on a display of the computing device. For instance, consider a case where a news application is installed on the smartphone and the user has subscribed to be notified about breaking news. In such a case, the user's smartphone would display notifications relating to the breaking news, such as when breaking news notifications are pushed to the user's smartphone from a server. Likewise, when a call is received, a notification is shown to the user, with options to accept or decline the call.

On some devices, the user may be notified about all such actions for all such entities on the computing device. This behavior of being constantly notified, however, may prove to be distracting for the user in certain cases. For instance, consider a case where the user is engaged in in a physical activity, such as exercising at a gym and the user's smartphone keeps delivering notifications to the user. Or in another example, the user may be at a workplace in a meeting and may receive notifications that are unrelated to work (e.g., news notifications to text message notifications) which may be distracting for the user.

One option for managing notifications on the computing devices includes implementation of one or more profiles on the computing device. Each of the one or more profiles are associated with one or more pre-set operational settings that are implemented when the profile is activated. As an example, upon implementation of a silent profile, all sounds and vibration of the smartphone may be disabled and only the display of the smartphone may be lit up, upon receipt of notifications. In case of a vibration profile, the sound of the smartphone may be disabled, and the smartphone may only light up the display and provide vibrations on receipt of notifications.

Despite the implementation of the above options, the user may still be distracted, for instance, due to unwanted vibration or displaying of the notifications on the display. For example, the usage of profiles may only provide for limited management in that the notifications are still delivered to the user in the form of vibrations, display, etc.

In another option for managing notifications, the user is provided with an option to individually define the notification settings for the entities. This, however, may prove to be cumbersome for the user. For instance, consider a case where there are 20 applications that a user uses in a given day at different time instances of the day. As an example, the user may use the news application, and a weather application in the morning at home. At work, the user may use the email application and stocks application. During evening time, the user may use the music application. In all such cases, it is desired that notifications from entities that are relevant are received. However, configuring the notifications for these 20 applications throughout the day may prove to be extremely cumbersome, time-consuming, and unproductive for the user.

According to aspects of the present subject matter, a computing device and a method for managing notifications on the computing device is disclosed. The computing device and the method disclosed herein provides for scoring the relevance of the different entities in each of operational modes. The operational modes may relate to modes of intended use and/or activity. Examples of the operational modes may include, a work mode, a driving mode, a leisure mode, a travel mode, a study mode, a sleeping mode, etc. In each of the operational modes, each of the entities may be scored based on the usage of the entity in the operational mode. Accordingly, upon selection or entry of a particular operational mode, one or more configuration settings that are based on the scores of the entities for the particular operational mode are provided to the user. The one or more configuration settings may include, but are not limited to, a setting for audio notification for each of the entities, a setting for display notification of each of the entities, and a vibration setting for notifications of each of the entities.

On being provided with the configuration settings, the user may either choose to apply the configuration settings or may modify or decline one or more of the configuration settings. According to the user's choices, the configuration settings are applied on the computing device. On being applied, the notifications pertaining to the different entities are automatically managed. In one or more implementations, entities that are most relevant to the user in a given operational mode are determined and notifications corresponding to such entities are automatically selected for displaying in the given operational mode. In one more implementations, relevance of the entities may be determined by providing the entities and a given operational mode as an input to a machine-learning model, which is trained based on a usage pattern of the entities for a given operational mode to provide as an output, scores of the entities for the given operational mode. In an example, entities whose scores are above a predetermined threshold may be considered as relevant to the user for a corresponding operational mode and therefore notifications from such entities may be displayed when the computing device is in that operational mode. Whereas, the entities whose scores are below the threshold may be considered as not relevant to the user and therefore notifications from such entities may be blocked from being intimated, i.e., either through displaying, vibration, audio, LED lit-up, etc. until the computing device is in that operational mode. Such blocked notifications may be stored in the computing device and presented later to the user, for example, when the user switches the operational mode. In this manner, the subject system can automatically manage the display of notifications to the user in the different operational modes of the device.

In the following description of the exemplary implementations of the subject technology, reference is made to the accompanying drawings, which form a part hereof, and in which is shown by way of illustration specific implementations in which the subject technology may be practiced. It is understood that other implementations may be utilized, and structural changes may be made without departing from the scope of the present invention.

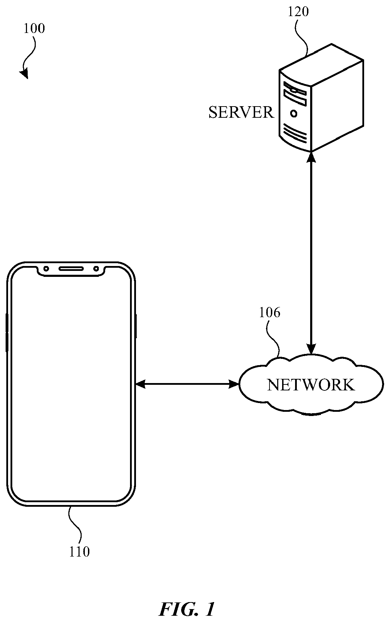

FIG. 1 illustrates an example network environment 100 in accordance with one or more implementations of the subject technology. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

The network environment 100 includes a computing device 110, and a server 120. The network 106 may communicatively (directly or indirectly) couple the computing device 110 and/or the server 120. In one or more implementations, the network 106 may be an interconnected network of devices that may include, or may be communicatively coupled to, the Internet. For explanatory purposes, the network environment 100 is illustrated in FIG. 1 as including the computing device 110, and the server 120; however, the network environment 100 may include any number of electronic devices and any number of servers.

The computing device 110 may be, for example, a desktop computer, a portable computing device such as a laptop computer, a smartphone, a peripheral device (e.g., a digital camera, headphones), a tablet device, a wearable device such as a watch, a band, and the like. In FIG. 1, by way of example, the computing device 110 is depicted as a smartphone. The computing device 110 may be, and/or may include all or part of, the system discussed below with respect to FIG. 8.

In one or more implementations, the computing device 110 may provide a system for training a machine learning model using training data, where the trained machine learning model is subsequently deployed locally at the computing device 110. Further, the computing device 110 may provide one or more frameworks for training machine learning models and/or developing applications using the machine learning models. In an example, the computing device 110 may include a user electronic device (e.g., smartphone) that displays notifications thereon. The computing device 110 may communicate with a server 120 (e.g., a remote server) for managing display of notifications on the computing device 110.

In an implementation, the server 120 may train one or more machine learning models for deployment to a client electronic device (e.g., the computing device 110). In other implementations, the server 120 may provide a system for training a machine learning model using training data, where the trained machine learning model is subsequently deployed locally at the server 120. The machine learning model may be deployed on the server 120 and/or the computing device 110 may then perform one or more machine learning algorithms. In an implementation, the server 120 may provide a cloud service that utilizes the trained machine learning model and continually learns over time.

In an example implementation, the computing device 110 may include a system process which may be configured to manage notifications on the computing device 110. The computing device 110 may include one or more operational modes configured thereon. In one or more implementations, the operational modes may be understood as modes of intended use and/or activity. Examples of the operational modes may include a work mode, a driving mode, a leisure mode, a travel mode, a study mode, a sleeping mode, etc. In each of the operational modes, the system process at the computing device may be configured to score entities (e.g., applications, widgets, contacts, etc.) installed on computing devices. The entities may be scored using a machine-learning model that is trained based on a usage pattern of the entities, such as frequency, duration (e.g., minutes/hours) and time of the user's interaction with the entities, etc., when the user is engaged in different activities, to provide scores for the entities for a given operational mode. For instance, user's interaction history with an entity 'X' indicates that the user interacts 3-4 times a day with the entity 'X' during office work hours, and do not interact with entity 'Y' during the office work hours. Thus, entity 'X' may have a higher score for an operational mode 'work' and the entity 'Y' may have a lower/lowest score for the operational mode 'work'.

The computing device 110 may provide entities and a given operational mode as an input to the machine-learning model to obtain scores of the entities for that operational mode as an output.. Thereafter, the computing device 110 compares the scores to a predefined threshold to determine the entities that are relevant for the given operational mode. As an instance, considering a threshold score of 40, entities that has scores above 40 may be considered as relevant for the given operational mode, and entities that has scores below 40 may be considered as not relevant for the given operational mode. In some examples, different threshold scores may be associated with different operational modes.

When the computing device 110 has determined relevance of the entities for a given operational mode, the computing device 110 provides one or more configuration settings to a user on a display of the computing device 110. The configuration settings may be based on the relevance of the entities for the operational mode. Examples of the configuration settings include, but are not limited to, a setting for audio notification for each of the entities, a setting for display notification of each of the entities, and a vibration setting for notifications of each of the entities. For example, audio setting may be turned 'on' for high scored (relevant) entities for a given operational mode and 'off' for low scored (not relevant) entities.

The user may either choose to apply the presented configuration settings or may modify one or more of the configuration settings. Accordingly, the configuration settings are stored on the computing device 110. The operational mode may be activated or deactivated manually by the user. In one or more implementation, the computing device 110 may be configured to automatically activate or deactivate a specific operational mode based on detecting a user activity via one or more sensors of the computing device 110. For example, upon detecting that a user is 'walking' via acceleration sensor(s), the computing device 110 may automatically activate a 'walking' operational mode. And, when the computing device 110 detects no motion via the acceleration sensor(s), the computing device 110 may deactivate or exit the 'walking' operational mode. In one or more implementations, the computing device 110 may automatically detect an appropriate operational mode and may present the detected operational mode to the user on a display of the computing device 110 to prompt the user to activate the detected operational mode (e.g., 'walking' activity detected, do you want to activate the 'walking' operational mode).

When an operational mode is activated (manually and/or automatically), the system process controls or manages the upcoming notifications pertaining to the different entities according to the configuration settings stored for the activated operational mode. For example, entities whose scores are lower than a predetermined threshold are considered not relevant to the user for a given operational mode and therefore notifications coming from such entities when the computing device 110 is operating in that operational mode may be blocked from display on the computing device 110. Such blocked notifications may be stored in the computing device 110 and presented later to the user, when the user or the device switches the operational mode (e.g., turns off a current operational mode or switches to a different operational mode from the current operational mode). For example, the computing device 110 operating in a 'work' operational mode may apply the corresponding configuration settings to block notifications from the entities that are not relevant for the 'work' operational mode. When the computing device 110 exists the 'work' operational mode, the blocked notifications may be presented to the user on a display of the computing device 110.

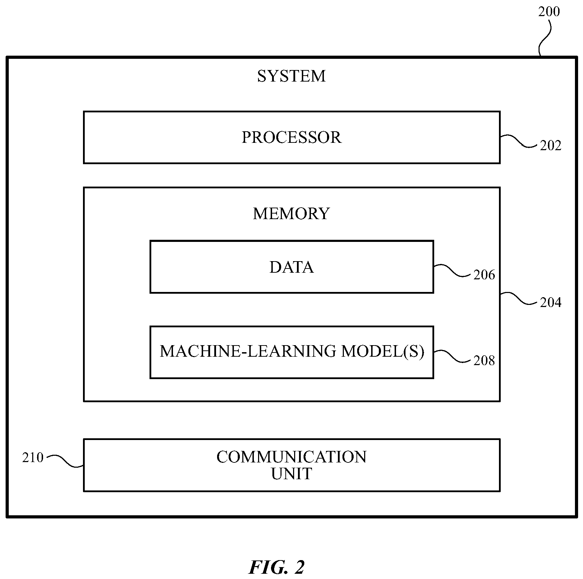

FIG. 2 illustrates an example system 200 in accordance with one or more implementations of the subject technology. In an example, the system 200 may be implemented in computing devices, such as the computing device 110. In another example, the system 200 may be implemented either in a single device or in a distributed manner in a plurality of device, the implementation of which would be apparent to a person skilled in the art.

In an example, the system 200 may include a processor 202, and memory 204 (memory device) and a communication unit 210. The memory 204 may store data 206 and one or more machine learning models 208.

In an example, the processor 202 may be a single processing unit or a number of units, all of which could include multiple computing units. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions and data stored in the memory 204.

The memory 204 may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

The data 206 serves, amongst other things, as a repository for storing data processed, received, and generated by one or more of the processor 202. Writing further, in a non-limiting manner, one or more of the aforementioned components of the system 200 may send or receive data, for example, using one or more input/output ports and one or more communication units.

The machine-learning model(s) 208, in an example, may include one or more of machine learning based models and artificial intelligence-based models, such as, for example, neural network models, or any other models. In an example, the machine-learning model(s) 208 may be implemented by the processor 202 for performing one or more of the operations and steps, as described herein.

In an example, the communication unit 210 may include one or more hardware units that support wired or wireless communication between the processor 202 and processors of other computing devices. In an example, the entities may include one or more of applications, widgets, contacts, and notifications. The notifications may include notifications related to the applications and/or notifications related to operating system of the system 200.

In an example implementation, a system process, that is implemented by the processor 202 of the system 200, may be configured to obtain entity data pertaining to entities associated with the system 200. Without limitation, examples of the entities may include, a widget, an application, a contact, etc. A widget may be understood as an application, or a component of an interface, that enables a user to perform a function or access a service. In an example, the entity data corresponding to a given entity may include details of usage of the entity in each of the operational modes. An example of entity data is shown herein below.

### Entity Data

| Entity Name | Usage | | |
|---|---|---|---|
| | Operational Mode-1 | | |
| | Frequency | Duration | Time |
| Application 1 | 5 times | 2 hours | 8am-11am |
| Widget 1 | 2 times | 0.1 hours | 6pm-8pm |
| Contact 1 | 3 times | 0.5 hours | 9am-5pm |

In an example, depending upon the entity, the usage of that entity may be determined based on one or more of: frequency (e.g., number of times per day or any time period), duration (e.g., minutes/hours) and/or time window (e.g., time of day) of the user's interaction with the entity, number of messages (e.g., text messages), number of calls, number of emails, number of clicks, number of hours of screen time, volume of data consumed, downlink data, uplink data, etc. For example, a usage of an entity such as a social media application may be determined based on the number of clicks and number of hours of screen time. Usage of an entity such as a contact may be determined based on the number of emails, messages and calls sent to and/or received from the contact.

As explained above, the entity data of the entity may be recorded for all of the operational modes. In an example, the processor 202 may be configured to record and store the entity data for the entities in the data 206.

After obtaining the entity data, for an operational mode, the processor 202 may be configured to generate the entity score for each of the entities based on the obtained entity data, for that operational mode. In one or more implementations, the processor 202 may provide the entity and associated entity data to a machine-learning model 208, which is pre-trained based on historical usage of the entities when the user is engaged in various activities, to output entity score for the entity for the given operational mode. In an example, the entity score may be directly proportional to the entity usage in the given operational mode. That is, higher the entity usage in the operational mode, higher is the entity score.

In one or more implementations, the machine learning model(s) 208 may include different machine learning models configured to generate entity scores for different operational modes. For example, one machine learning model may be trained to generate entity scores for an operational mode 'X', another machine learning model may be trained to generate entity scores for an operational mode 'Y', and so forth. In one or more implementations, the machine learning model(s) 208 may include a universal machine learning model that is trained to generate entity scores for any kind of operational mode.

In one or more implementations, the system 200 may store different machine learning model(s) 208 that have each been trained using different types of entity usage parameter. For example, a first machine learning model may have been trained based on the entity and frequency (e.g., number of times in a day) of usage of the entity for one or more operational modes, a second machine learning model may have been trained based on the entity and the duration (e.g., minutes/hours) of usage of the entity for one or more operational modes, and so forth. The system 200 may include any number of machine learning models 208 that have been trained based on any kind of entity and any kind of usage parameters that may generate score for the entity for any kind of operational mode.

In an example, the entity scores for the entities in the operational mode may be stored as part of the entity data in the data 206. As may be understood, when the system 200 includes multiple operational modes, the processor 202 may generate the entity scores for the entities, for each of the operational modes, and may store the entity scores in the entity data in the data 206.

In one or more implementations, the machine learning model may include different machine learning models for detecting different types of objects. For example, one machine learning model may be trained to classify fruits in images, another machine learning model may be trained to classify flowers in images, and so forth. In one or more implementations, the machine learning models 208 may include a universal machine learning model that is trained to classify any type of object detected in an image.

Once the entity scores are generated, the processor 202 may be configured to define a set of configuration settings for each of the operational mode. The set of configuration settings for each operational mode may include operation settings for the entities which, when implemented, affect the rendering of the notifications corresponding to the entities. As an example, the operation setting may include audio, display, vibration, LED lit-up, and/or data usage settings. In one or more implementations, the settings may be ranked and/or prioritized based on a perceived disruptiveness and/or subtleness of the settings.

In an example, the processor 202 may be configured to determine the operation settings for the entities based on their corresponding scores. For instance, a threshold entity score may be predefined (or determined or adjusted on-the-fly) for each of the operational modes. Thus, all the entities whose corresponding entity score is above the threshold entity score corresponding to the operational mode, may be permitted to provide their notifications during the operational mode. Entities whose scores are below the threshold entity score may be blocked from displaying their notifications during the operational mode (e.g., until the entity is used/accessed and/or a later time during another operational mode).

In an example, the processor 202 may be configured provide a recommendation of the configuration settings associated with the operational mode to the user. The recommended configuration settings may include, for example, turned 'ON' audio, vibration and display alerts for entities that are above the predefined threshold, and turned 'OFF' audio, vibration and display alerts for entities that are below the predefined threshold. The user may accept the recommended configuration settings or may modify the configuration settings. For example, a user may modify a recommendation configuration setting for a low scored entity and may choose to turn 'ON' all the alerts for that low scored entity. In one or more implementation, if no response to recommendation is received by the user, the processor 202 may be configured to automatically accept the recommended configuration settings. The user may be provided with an option to manually change the stored configuration settings when needed.

In a case where modifications to the recommended configuration settings are requested by the user, the user may provide one or more user inputs for changing one or more configuration settings. According to the user inputs, the processor 202 may change the one or more configuration settings and the modified configuration settings may be stored. As an example, the user may select an entity which is in the block list to receive its notification or may alter the notification settings of an entity that is permitted to provide the notifications.

When the processor 202 detects activation of an operational mode (e.g., via manual or automated activation), the processor 202 may be configured to apply the configuration settings associated with the corresponding operational mode on incoming notifications. By doing so, the processor 202 controls display of notifications, based at least in part on the configuration settings when the system 200 is in the operational mode. For instance, the processor 202 may be configured to receive a notification and may apply the configuration settings to the notification to restrict or allow the display of the notification on a display of the system 200.

In an example, a first notification may be displayed by the processor 202 based on the application of the configuration settings. Furthermore, based on the application of the configuration settings, the processor 202 may be configured to block display of a second notification. The processor 202 is configured to store the blocked second notification. When the processor 202 detects that the operational mode has been deactivated, the processor 202 may be configured to display the stored second notification subsequent to detecting deactivation of the operational mode. In one or more implementations, the processor 202 may have blocked and stored several notifications in a given operational mode, and such notifications may be retrieved by the processor 202 upon deactivation of the operational mode and displayed onto a display of the system 200. The processor 202 may be configured to display such notifications in form of a notification summary including all such notifications that were blocked from display during the operational mode.

In accordance with aspects of the disclosure, the processor 202 may be further configured to receive a first notification when the system 200 is in the operational mode. On receipt of the first notification, the processor 202 may be configured to generate a notification score for the notification. In an example, the processor 202 may generate a notification score by using a machine learning model, which has been pre-trained to generate scores for the notification based on, for example, historical interactions of the user with the notification and/or entity associated with the notification. In an example, the notification score may be indicative of a count related to the notification. That is, how many times, said notification for a given entity has arrived. The processor 202 may therefore provide an incoming notification to the trained machine-learning model, and the machine-learning mode outputs a notification score for the incoming notification. In an example where the notification score exceeds a threshold, the processor 202 may be configured to update the configuration settings to obtain new configuration settings for the operational mode. Subsequently, the processor 202 may be configured to generate and provide a recommendation for the new configuration settings. On receiving the recommendation, the user may choose to either accept the new configuration settings or reject and/or modify the recommended configuration settings. The new configuration settings may be sent as prompts or alerts to the user. As an example, the user may be prompted with a new setting such as "you have often sent messages to this entity 'contact A' while using your device in the work mode, would you like to allow notifications from 'contact A' in a work mode?".

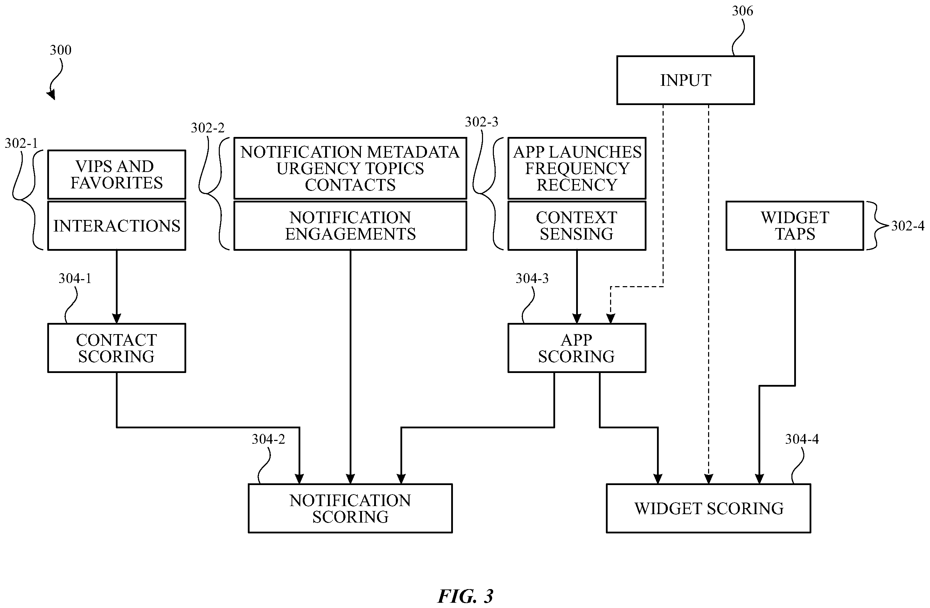

FIG. 3 illustrates a framework 300 of generating entity scores for entities, according to one or more aspects of the present subject matter. In an example, the framework includes a plurality of parameters 302 used for the scoring the relevance of entities 304. Based on the parameters 302, the entities 304 may be scored. In one or more implementations, the machine-learning model(s) 208 may be trained on these parameters 302 to generate scores for the entities. For instance, as shown, contacts 304-1 may be scored based on parameters 302-1 which may include user's interactions with the contact and whether the contact has been marked by the user as VIP or favorite. Likewise, entity notifications 304-2 may be scored based on parameters 302-2 that include engagements of the user with the notification and optionally notification metadata such as urgency of the notification, keywords or topics associated with the notification, contact associated with the notification, context of the notification and the like. In one or more implementations, notification metadata may include one or more of parameters 302. In an example, an input 306 may be received for a given application and may be used to score the application 304-3. In addition, parameters 302-3, such as app launches and context may be used as parameters. For widgets 304-4, a number of widget taps may be used as parameter 302-4, in addition to input 306. In an example, a given input may be correlated to more than one entity. For instance, the input 306 may be correlated with the application 304-3 and the widgets 304-4. Furthermore, in an example implementation, one or more of the entities 304 may interact with each other for the purpose of scoring. The parameters described herein may be used to determined usage of the entities.

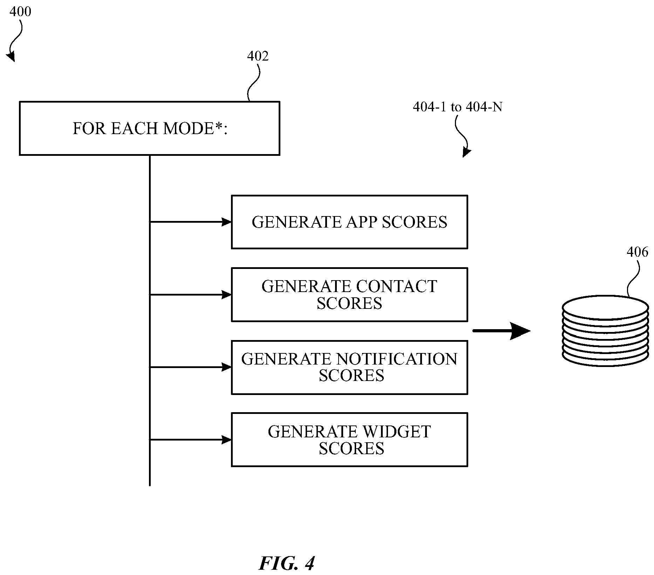

FIG. 4 illustrates a representation 400 of an operation that may be performed for calculating entity scores, according to aspects of the present subject matter. In an example implementation, the processor 202 may be configured to obtain the entity data for each of the entities, from the data 206. The processor 202 may thereafter perform the operation, illustrated in the representation 400. In said operation, at 402, the processor 202 may select each of the operational modes one by one. The processor 202 may provide the entity, entity data and the operational mode to the machine-learning model(s) 208 to generate the entity scores for the entities in operations 404-1 to 404-N. In each of the operations 404-1 to 404-N, an entity is selected and its corresponding entity data for the selected mode is obtained from the data 206. Based on the obtained score, the machine-learning model may generate the entity score and store the same in the data 206.

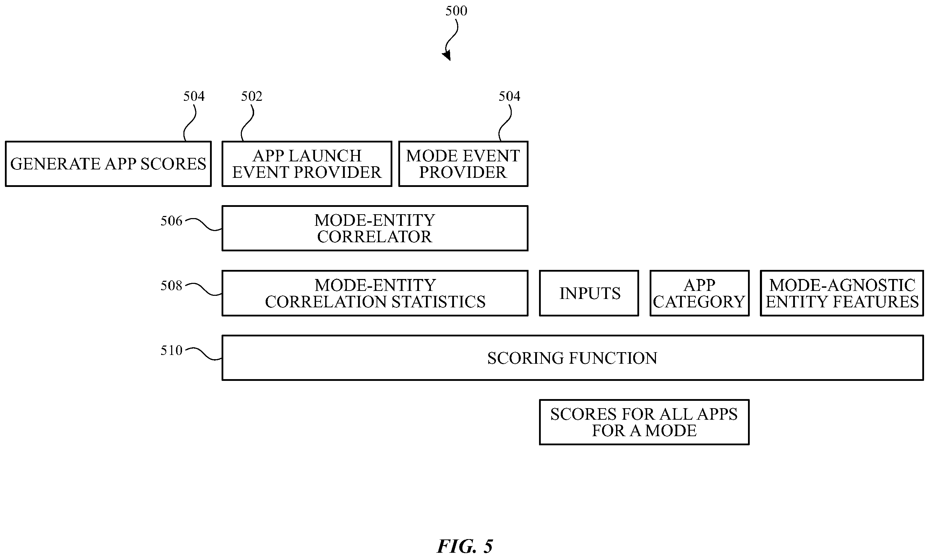

FIG. 5 illustrates a block diagram 500 of generating entity scores, according to an example implementation of the present subject matter. This block diagram 500 has been illustrated with reference to the 'applications' as an entity 404. In an example, details of the operational mode, entity 404 and usage data corresponding to the entity 404 may be obtained and provided to the machine-learning model. For example, details from an app launch event provider 502 are obtained. The app launch event provider is configured to track a number of the application launches. Further, details of the current operational mode in which the entity 404 (application) was launched may be obtained by the event provider 504.

A mode-entity correlator 506 may be configured to map the obtained details together and store them as mode-entity correlation statistics 508. Subsequently, based on inputs, an app category, and/or mode-agnostic entity features, the machine-learning model may be configured to utilize a scoring function 510 (or predefined scoring algorithm) to generate the score for the 'application' entity 404. Likewise, all such applications of the system 202 may be scored.

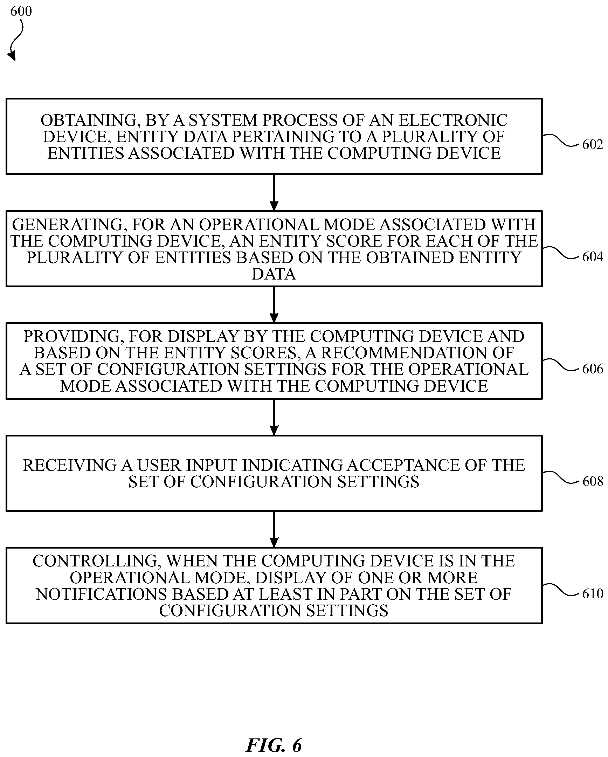

FIG 6 illustrates a flowchart of a process 600 in accordance with one or more implementations of the subject technology. In an example, the process 600 may be implemented by the system 200. In an example, the process 600 may be implemented in a single computing device, for example, the system 200. In another example, the process 600 may be implemented in a distributed manner, without departing from the spirit and scope of the present subject matter. Furthermore, details of the operations of the process 600 which are already described herein in the above figures (e.g., FIGS. 3 and 4) are not included in detail in the description of the process 600. Furthermore, the operations of the process 600 described herein may be implemented at the least by one or more components, for example, the processor 202, of the system 200. Further for explanatory purposes, some of the blocks of the process 600 are described herein as occurring in serial, or linearly. However, multiple blocks of the process 600 may occur in parallel. In addition, the blocks of the process 600 need not be performed in the order shown and/or one or more blocks of the process 600 need not be performed and/or can be replaced by other operations.

At block 602, the process 600 includes obtaining, by a system process of a computing device, entity data pertaining to entities associated with the computing device (e.g., the computing device 110 or the system 200). In an example, the entities include one or more applications installed on the computing device, one or more widgets installed on the computing device, and one or more contacts stored in the computing device

At block 604, the process 600 includes generating, for an operational mode associated with the computing device, an entity score for each of the entities based on the obtained entity data. In one or more implementations, the computing device may provide the entity data for each of the entities to a machine-learning model (e.g., machine-learning model(s) 208) for score generation, and the machine-learning model may output the entity scores for each of the entities for a given operational mode. For example, data corresponding to an entity 'application X' and another entity 'application Y' may be provided to the machine-learning model to generate entity scores. In this example, consider a score '40' is obtained for 'application X' and score '70' is obtained for 'application Y'.

At block 606, the process 600 includes providing, for display by the computing device and based on the entity scores, a recommendation of a set of configuration settings for the operational mode associated with the computing device. In one or more implementations, the computing device may provide recommendation of a set of configuration settings for the operation mode. The recommendation is provided based on the entity scores. For example, for entity having an entity score higher than the predefined threshold, the computing device may provide a recommendation of configuration settings that when applied may allow display of the notifications from the entity. For entity with an entity score lower than the predefined threshold, the computing device may provide a recommendation of configuration settings that when applied may block the notifications from that entity. Continuing with the above example, a recommendation of configuration settings for blocking the notifications for 'application X' may be provided, and the configuration settings for allowing display of the notifications for 'application Y' may be provided.

At block 608, the process 600 includes receiving a user input indicating acceptance of the set of configuration settings. In an example, the user may accept the recommended settings and/or may modify and then save the configuration settings. In one or more implementations, the computing device may receive the user input and store the configuration settings (recommended or modified) into a non-transitory memory (e.g., memory 204 of the system 200). Continuing with the above example, a user input indicating acceptance of the recommended configuration settings for 'application X' and 'application Y' may be received and the configuration settings may be stored in the memory of the computing device.

At block 610, the process 600 includes controlling, when the computing device is in the operational mode, display of one or more notifications based at least in part on the set of configuration settings. In one or more implementations, the computing device may control (e.g., allow or block) display of the notifications based on applying the stored configuration settings for the operation mode. Continuing with the above example, notifications from the entity 'application X' may be blocked from display, and the notifications from the entity 'application Y' may be allowed to display.

In one or more implementations, the computing device may store the blocked notification in the memory of the computing device. Upon detecting deactivation of the operational mode, the computing device may display the blocked notification (or stored notification). In an example, the blocked notification may (e.g., subsequently) be displayed in the form of a notification summary on the display of the computing device.

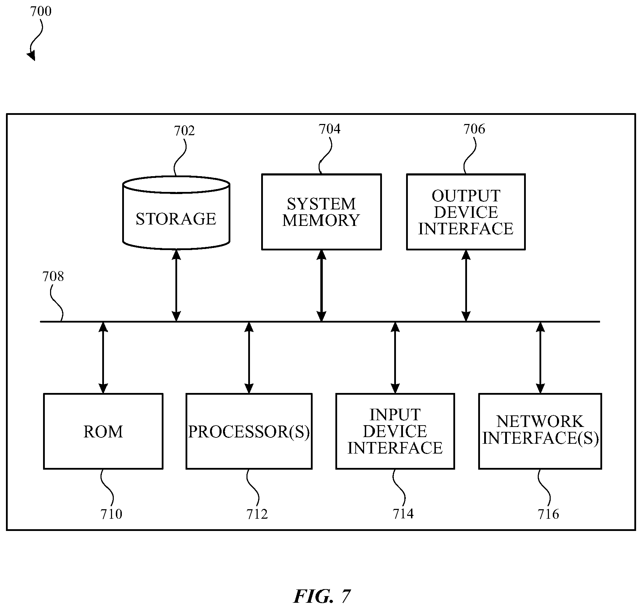

FIG. 7 depicts a computing-device based implementation of the system of FIG. 2 in accordance with one or more implementations of the subject technology. The system 700 can be, and/or can be a part of, the computing device 110, the system 200, and/or the server 120 shown in FIG. 1. The system 700 may include various types of computer readable media and interfaces for various other types of computer readable media. The system 700 includes a bus 708, one or more processing unit(s) 712, a system memory 704 (and/or buffer), a ROM 710, a permanent storage device 702, an input device interface 714, an output device interface 706, and one or more network interfaces 716, or subsets and variations thereof.

The bus 708 collectively represents all system, peripheral, and chipset buses that communicatively connect the numerous internal devices of the system 700. In one or more implementations, the bus 708 communicatively connects the one or more processing unit(s) 712 with the ROM 710, the system memory 704, and the permanent storage device 702. From these various memory units, the one or more processing unit(s) 712 retrieves instructions to execute and data to process in order to execute the processes of the subject technology. The one or more processing unit(s) 712 can be a single processor or a multi-core processor in different implementations.

The ROM 710 stores static data and instructions that are needed by the one or more processing unit(s) 712 and other modules of the system 700. The permanent storage device 702, on the other hand, may be a read-and-write memory device. The permanent storage device 702 may be a non-volatile memory unit that stores instructions and data even when the system 700 is off. In one or more implementations, a mass-storage device (such as a magnetic or optical disk and its corresponding disk drive) may be used as the permanent storage device 702.

In one or more implementations, a removable storage device (such as a floppy disk, flash drive, and its corresponding disk drive) may be used as the permanent storage device 702. Like the permanent storage device 702, the system memory 704 may be a read-and-write memory device. However, unlike the permanent storage device 702, the system memory 704 may be a volatile read-and-write memory, such as random-access memory. The system memory 704 may store any of the instructions and data that one or more processing unit(s) 712 may need at runtime. In one or more implementations, the processes of the subject technology are stored in the system memory 704, the permanent storage device 702, and/or the ROM 710. From these various memory units, the one or more processing unit(s) 712 retrieves instructions to execute and data to process in order to execute the processes of one or more implementations.

The bus 708 also connects to the input and output device interfaces 714 and 706. The input device interface 714 enables a user to communicate information and select commands to the system 700. Input devices that may be used with the input device interface 714 may include, for example, alphanumeric keyboards and pointing devices (also called "cursor control devices"). The output device interface 706 may enable, for example, the display of images generated by system 700. Output devices that may be used with the output device interface 706 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 7, the bus 708 also couples the system 700 to one or more networks and/or to one or more network nodes, such as the computing device 110 shown in FIG. 1, through the one or more network interface(s) 716. In this manner, the system 700 can be a part of a network of computers (such as a LAN, a wide area network ("WAN"), or an Intranet, or a network of networks, such as the Internet. Any or all components of the system 700 can be used in conjunction with the subject technology.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

The present disclosure recognizes that the use of personal information data, in the present technology, can be used to the benefit of users. For example, the personal information can be used in performing entity scoring. Further, other uses for personal information data that benefit the user are also contemplated by the present disclosure. For instance, image data, health and fitness data, location data, or the like may be exchanged and used for entity scoring operations.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominently and easily accessible by users and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates implementations in which users selectively block the use of, or access to, personal information data. That is, the present disclosure contemplates that hardware and/or software elements can be provided to prevent or block access to such personal information data. For example, in the case of entity scoring operation, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed implementation or embodiments, the present disclosure also contemplates that the various embodiments can also be implemented without the need for accessing such personal information data. That is, the various embodiments of the present technology are not rendered inoperable due to the lack of all or a portion of such personal information data.

In accordance with aspects of the disclosure, a method is provided that includes obtaining, by a system process of a computing device, entity data pertaining to entities associated with the computing device. generating, for an operational mode associated with the computing device, an entity score for each of the entities based on the obtained entity data, and providing, for display by the computing device and based on the entity scores, a recommendation of a set of configuration settings for the operational mode associated with the computing device. The method further includes receiving a user input indicating acceptance of the set of configuration settings, and controlling, when the computing device is in the operational mode, display of one or more notifications based at least in part on the set of configuration settings.

In accordance with other aspects of the subject technology, a system is provided that includes a processor; and a memory device containing instructions, which when executed by the processor, cause the processor to: obtain entity data pertaining to entities associated with the computing device, generate, for an operational mode associated with the computing device, an entity score for each of the entities based on the obtained entity data, and provide, for display by the computing device and based on the entity scores, a recommendation of a set of configuration settings for the operational mode associated with the computing device. A user input indicating acceptance of the set of configuration settings is received, and display of one or more notifications is controlled based at least in part on the set of configuration settings when the computing device is in the operational mode.

In accordance with other aspects of the subject technology, a non-transitory machine-readable medium is provided that includes code that, when executed by a processor, causes the processor to perform a method, the method including obtaining, by a system process of a computing device, entity data pertaining to entities associated with the computing device. generating, for an operational mode associated with the computing device, an entity score for each of the entities based on the obtained entity data, and providing, for display by the computing device and based on the entity scores, a recommendation of a set of configuration settings for the operational mode associated with the computing device. The method further includes receiving a user input indicating acceptance of the set of configuration settings, and controlling, when the computing device is in the operational mode, display of one or more notifications based at least in part on the set of configuration settings.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of' preceding a series of items, with the term "and" or "or" to separate any of the items, modifies the list as a whole, rather than each member of the list (i.e., each item). The phrase "at least one of' does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation, or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "example" or "exemplary" is used herein to mean "serving as an example, instance, or illustration". Any embodiment described herein as "exemplary" or as an "example" is not necessarily to be construed as preferred or advantageous over other implementations. Furthermore, to the extent that the term "include", "have", or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

## Claims

1. A method, comprising:
obtaining, by a system process of a computing device, entity data pertaining to a plurality of entities associated with the computing device;
generating, for an operational mode associated with the computing device, an entity score for each of the plurality of entities based on the obtained entity data;
providing, for display by the computing device and based on the entity scores, a recommendation of a set of configuration settings for the operational mode associated with the computing device;
receiving a user input indicating acceptance of the set of configuration settings; and
controlling, when the computing device is in the operational mode, display of one or more notifications based at least in part on the set of configuration settings.

2. The method of claim 1, wherein controlling display of the one or more notifications comprises:
receiving the one or more notifications; and
applying, when the computing device is in the operational mode, the set of configuration settings to the one or more notifications to restrict or allow the display of the one or more notifications.

3. The method of claim 2, wherein controlling display of the one or more notifications further comprises:
displaying, based on the applying of the set of configuration settings, a first one of the one or more notifications;
storing, without displaying and based on the applying of the set of configuration settings, a second one of the one or more notifications;
detecting deactivation of the operational mode; and
displaying the stored second one of the one or more notifications by the computing device after the deactivation of the operational mode.

4. The method of claim 3, further comprising:
generating a notification summary comprising at least the second one of the one or more notifications; and
displaying the notification summary to a user after the deactivation of the operational mode.

5. The method of claim 1, wherein the plurality of entities comprises one or more applications installed on the computing device, one or more widgets installed on the computing device, and one or more contacts stored in the computing device.

6. The method of claim 1, further comprising:
receiving a first one of the one or more notifications when the computing device is in the operational mode;
generating, using a machine learning model, a notification score for the first one of the one or more notifications; and
generating, for display, a recommendation of a new set of configuration settings for the first one of the one or more notifications based on the notification score.

7. The method of claim 6, wherein generating the notification score comprises generating the first one of the one or more notifications based at least in part on notification metadata and at least one of the entity scores.

8. A system comprising:
a processor; and
a memory device containing instructions, which when executed by the processor, cause the processor to:
obtain entity data pertaining to a plurality of entities associated with the system;
generate, for an operational mode associated with the system, an entity score for each of the plurality of entities based on the obtained entity data;
provide, for display by the system and based on the entity scores, a recommendation of a set of configuration settings for the operational mode associated with the system;
receive a user input indicating acceptance of the set of configuration settings; and
control, when the system is in the operational mode, display of one or more notifications based at least in part on the set of configuration settings.

9. The system of claim 8, wherein for controlling display of the one or more notifications, the processor is configured to:
receive the one or more notifications; and
apply, when the system is in the operational mode, the set of configuration settings to the one or more notifications to restrict or allow the display of the one or more notifications.

10. The system of claim 9, wherein for controlling display of the one or more notifications, the processor is further configured to:
display, based on the applying of the set of configuration settings, a first one of the one or more notifications;
store, without displaying and based on the applying of the set of configuration settings, a second one of the one or more notifications;
detect deactivation of the operational mode; and
display the stored second one of the one or more notifications by the system after the deactivation of the operational mode.

11. The system of claim 10, wherein the processor is further configured to:
generate a notification summary comprising at least the second one of the one or more notifications; and
display the notification summary to a user after the deactivation of the operational mode.

12. The system of claim 8, wherein the plurality of entities comprises one or more applications installed on the system, one or more widgets installed on the computing device, and one or more contacts stored in the system.

13. The system of claim 8, wherein the processor is further configured to:
receive a first one of the one or more notifications when the system is in the operational mode;
generate, using a machine learning model, a notification score for the first one of the one or more notifications; and
generate, for display, a recommendation of a new set of configuration settings for the first one of the one or more notifications based on the notification score.

14. The system of claim 13, wherein for generating the notification score, the processor is further configured to generate the first one of the one or more notifications based at least in part on notification metadata and at least one of the entity scores.

15. A non-transitory machine-readable medium comprising instructions that, when executed by a processor, causes the processor to perform operations comprising:
obtaining, by a system process of the computing device, entity data pertaining to a plurality of entities associated with the computing device;
generating, for an operational mode associated with the computing device, an entity score for each of the plurality of entities based on the obtained entity data;
providing, for display by the computing device and based on the entity scores, a recommendation of a set of configuration settings for the operational mode associated with the computing device;
receiving a user input indicating acceptance of the set of configuration settings; and
controlling, when the computing device is in the operational mode, display of one or more notifications based at least in part on the set of configuration settings.

16. The non-transitory machine-readable medium of claim 15, the operations further comprise:
receiving the one or more notifications; and
applying, when the computing device is in the operational mode, the set of configuration settings to the one or more notifications to restrict or allow the display of the one or more notifications.

17. The non-transitory machine-readable medium of claim 16, wherein the operations further comprise:
displaying, based on the applying of the set of configuration settings, a first one of the one or more notifications;
storing, without displaying and based on the applying of the set of configuration settings, a second one of the one or more notifications;
detecting deactivation of the operational mode; and
displaying the stored second one of the one or more notifications by the computing device after the deactivation of the operational mode.

18. The non-transitory machine-readable medium of claim 17, wherein the operations further comprise:
generating a notification summary comprising at least the second one of the one or more notifications; and
displaying the notification summary to a user after the deactivation of the operational mode.

19. The non-transitory machine-readable medium of claim 15, wherein the operations further comprise:
receiving a first one of the one or more notifications when the computing device is in the operational mode;
generating, using a machine learning model, a notification score for the first one of the one or more notifications; and
generating, for display, a recommendation of a new set of configuration settings for the first one of the one or more notifications based on the notification score.

20. The non-transitory machine-readable medium of claim 19, wherein the operations further comprise generating the first one of the one or more notifications based at least in part on notification metadata and at least one of the entity scores.
